# EUROPÄISCHE PATENTSCHRIFT

(11) **EP 3 583 643 B1**
(45) Veröffentlichungstag und Bekanntmachung des Hinweises auf die Patenterteilung: **30.09.2020**
(21) Anmeldenummer: 18706228.6
(22) Anmeldetag: 13.02.2018
(51) Int. Cl.: H01M 4/131, C01G 45/12, C01G 51/00, C01G 53/00, C04B 35/01, C04B 35/628, H01M 4/1391, H01M 4/505, H01M 4/525, H01M 4/36, H01M 10/052, H01M 4/62

(54) **MIT ALUMINIUMOXID UND TITANDIOXID UMHÜLLTE LITHIUM-MISCHOXIDPARTIKEL UND VERFAHREN ZU DEREN HERSTELLUNG**
MIXED LITHIUM OXIDES COATED WITH ALUMINIUM OXIDE AND TITANIUM OXIDE AND PROCESS FOR MAKING THEM
OXYDES DE LITHIUM MÉLANGÉS REVÊTUS D'OXYDE D'ALUMINIUM ET D'OXYDE DE TITANE ET PROCÉDÉ DE LEUR PREPARATION

(30) Priorität: 17.02.2017 EP 17156693
(43) Veröffentlichungstag der Anmeldung: 25.12.2019
(73) Patentinhaber: Evonik Operations GmbH, 45128 Essen (DE)
(72) Erfinder: ESKEN, Daniel, 63526 Erlensee (DE); HOFMANN, Christian, 36381 Schlüchtern (DE)
(74) Vertreter: Evonik Patent Association
(86) Internationale Anmeldenummer: PCT/EP2018/053580
(87) Internationale Veröffentlichungsnummer: WO 2018/149834

(56) Entgegenhaltungen:
- WO-A1-2012/022624
- WO-A1-2016/196688
- JP-A- 2009 016 302
- JP-A- 2011 181 386

## Beschreibung

Die Erfindung betrifft ein Verfahren zur Herstellung von Lithium-Mischoxidpartikeln umhüllt mit Aluminiumoxid und Titandioxid. Die Erfindung betrifft ferner spezielle mit Aluminiumoxid und Titandioxid umhüllte Lithium-Mischoxidpartikel.

Es ist bekannt, dass durch eine Beschichtung von Lithium-mischoxidpartikeln mit Metalloxiden unerwünschte Reaktionen des Elektrolyten mit den Elektrodenmaterialien gehemmt werden können.

In WO2012022624 wird ein Verfahren zur Herstellung von (NiₓMn_{y}Co_{z})ₐ(Al₂O₃)_{b}, mit 0,3 ≤ x ≤ 0,9, 0 ≤ y ≤ 0,45, 0 < z ≤ 0,4, x + y + z = 1 und a + 2b = 1, b ≤ 0,4 offenbart, bei dem eine Vorläuferverbindung [NiₓMn_{y}Co_{z}]OOH trocken unter scherenden Bedingungen mit Aluminiumoxid, beispielsweise pyrogenem Aluminiumoxid, in Kontakt gebracht wird. Hierdurch wird eine feste Hülle aus Aluminiumoxid gebildet. Anschließende Temperaturbehandlung führt zum Produkt.

Aus WO00/70694 sind Lithium-Mischoxidpartikel bekannt, die mit Oxiden beziehungsweise Mischoxiden von Zr, AI, Zn, Y, Ce, Sn, Ca, Si, Sr, Mg und Ti, beschichtet sind. Sie werden erhalten, indem man die unbeschichteten Partikel in einem organischen Lösungsmittel suspendiert, die Suspension mit einer Lösung einer hydrolysierbaren Metallverbindung und einer Hydrolyselösung versetzt und danach die beschichteten Partikel abfiltriert, trocknet und calciniert.

Ähnlich ist die Offenbarung in US2004091779. Hier wird ein Kathodenmaterial der Zusammensetzung Li₁₊ₓNi_{α}Mn_{β}Co_{y}M'_{δ}O_{2-z}X_{z} mit M' = Mg, Zn, AI, Ga, B, Zr, Ti; X = F, S, Cl, I; 0 < x < 0,333, 0,2 ≤ a ≤ 0,6, 0,2 ≤ β ≤ 0,667, 0 ≤ γ ≤ 0,333, δ ≤ 0 ≤ 0.2, und 0 < z < 0,5 mit einem oder mehreren Oxiden von AI, Bi, Ga, Ge, In, Mg, Pb, Si, Sn, Ti, TI, Zn, Zr beschichtet.

Ähnlich ist die Offenbarung in WO2011/031544. Hier wird ein Kathodenmaterial Li₁₊ₓM₁₋ₓO_{2-z}F_{z}, wobei M ein Metall mit Ausnahme von Li ist und 0,01 < x < 0,3, 0 < z < 0,2, mit einem oder mehreren Metalloxiden von Al₂O₃, Bi₂O₃, B₂O₃, ZrO₂, MgO, Cr₂O₃, MgAl₂O₄, Ga₂O₃, SiO₂, SnO₂, CaO₂, SrO, BaO, TiO₂, Fe₂O₃, MoO₃, MoO₂, CeO₂, La₂O₃, ZnO beschichtet.

In WO2014/142803 wird ein Verfahren zur Abscheidung einer Oxidbeschichtung auf einem anorganischen Substrat beansprucht, bei dem man eine wässrige Zusammensetzung, die ein Tetraalkylammonium Polyoxoanion und Lithiumhydroxid enthält, auf der Oberfläche eines anorganischen Substrates abscheidet und thermisch behandelt bis das Lithium Polyoxoanion in ein Oxid umgewandelt ist. Das Tetraalkylammonium Polyoxoanion umfasst solche mit der allgemeinen Formel AₓO_{y}^{z-}, wobei A ein Übergangsmetall oder ein Metall oder Metalloid ausgewählt aus Al, Si, B, Ga, Ge, As, Sn, Sb, TI, Pb und Bi, oder eine Kombination hiervon ist, O ein Sauerstoffatom ist, und die Werte von x, y und z von der Wertigkeit von A in dem Polyoxoanion abhängen und y>x ist.

Aus US2015340689 ist ein Kathodenaktivmaterial mit einem Kern aus einem Material bekannt, das fähig zur Einlagerung und Auslagerung von Lithium ist und das eine Beschichtung aus nanoskaligem Zirkonoxid und weiteren Beschichtung aus Oxiden von Mg, Al, Co, K, Na, Ca, Si, Ti, V, Sn, Ge, Ga, B, As, Zr oder einer Mischung hiervon vorsieht.

In WO2005011044 wird ein Kathodenmaterial offenbart, welches durch trockenes Vermischen eines Lithiummischoxides mit einem elektrisch inaktiven, nanoskaligem Metalloxid erhalten wird und das Metalloxid aus der Gruppe bestehend aus Al₂O₃, SiO₂, MgO, TiO₂, SnO₂, B₂O₃, Fe₂O₃, ZrO₂ und Mischungen hiervon ausgewählt wird.

WO 2016196688 A1 offenbart ein Verfahren zur Herstellung von mit Al₂O₃ und TiO₂ beschichteten Lithium-Nickel-Mangan Mischoxid durch Atomlagenabscheidung von Al₂O₃ Partikel hergestellt aus Trimethylaluminium und Wasser und TiO₂ Partikel erzeugt aus TiCl₄ und H₂O₂. In WO 2016196688 A1 wird keine trockene Vermischung der Komponente offenbart.

JP 2011181386 A offenbart trockene Vermischung eines Lithium-Nickel-Cobalt-Aluminium Mischoxides mit Aluminiumdioxid und Herstellung entsprechender Elektroden. Es wird weiterhin vorgeschlagen, zusätzlich zum Aluminiumoxid auch Titandioxid einzusetzen. Es werden keine aggregierte Primärpartikel solcher Metalloxiden offenbart.

JP 2009016302 A offenbart ein Verfahren zur Herstellung von Lithium-Mischoxid umhüllt mit Al₂O₃ und TiO₂ durch trockene Vermischung von Komponenten mittels eines Henschel Mischers, allerdings ohne Angabe der spezifischen Leistung des verwendeten Mischers. Es werden keine aggregierte Primärpartikel von entsprechenden Metalloxiden offenbart.

Die Beschichtung von Kathodenmaterialien von Lithiumionenbatterien mit Metalloxiden, auch mit Mischungen von Metalloxiden ist bekannt. Durch die Beschichtung können unerwünschte Reaktionen des Elektrolyten mit den Kathodenmaterialien reduziert werden. Dennoch bleibt die Herausforderung diese Beschichtungen zu verbessern.

Mit der vorliegenden Erfindung wird ein Verfahren beansprucht, bei dem ein spezielles Gemisch von Aluminiumoxid und Titandioxid als Beschichtungsmaterial eingesetzt wird. Obgleich der genannte Stand der Technik Gemische aus Aluminiumoxid und Titandioxid umfasst, gibt er keine Anhaltspunkte für ein Verfahren, bei dem ein spezielles Gemisch eingesetzt wird.

Gegenstand der Erfindung ist ein Verfahren zur Herstellung umhüllter Lithium-Mischoxidpartikel, bei dem man Lithium-Mischoxidpartikel und ein Gemisch umfassend Aluminiumoxid und Titandioxid, welche jeweils in Form aggregierter Primärpartikel vorliegen, mittels eines Mischaggregates mit einer spezifischen Leistung von 0,1 - 1, bevorzugt 0,2 - 0,8 kW pro kg eingesetzte Lithium-Mischoxidpartikel und Gemisch, in Summe, unter scherenden Bedingungen trocken vermischt.

Unter einem trockenen Vermischen ist zu verstehen, dass keine Flüssigkeit eingesetzt wird. Es ist jedoch möglich, dass den Einsatzstoffen Feuchtigkeit anhaftet oder diese Kristallwasser aufweisen.

Ist die spezifische Leistung geringer als 0,1 kW pro kg eingesetzte Lithium-Mischoxidpartikel und Gemisch, in Summe, erfolgt eine nicht homogene Beschichtung, welche nicht fest mit dem Kern verbunden ist.

Eine spezifische Leistung von mehr als 1 kW pro kg eingesetzte Lithium-Mischoxidpartikel und Gemisch, in Summe, führt zu schlechteren elektrochemischen Eigenschaften. Zudem besteht die Gefahr, dass die Beschichtung spröde und brüchig wird.

Die Leistung des Mischaggregates kann über weite Grenzen variieren. So können Mischaggregate im Labormaßstab mit einer Leistung von 0,1 - 5 kW oder Mischaggregate für den Produktionsmaßstab mit einer Leistung von 10 - 1000 kW eingesetzt werden.

Ebenso kann das Volumen des Mischaggregates über weite Grenzen variiert werden. So können Mischaggregate im Labormaßstab mit einem Volumen von 1 - 10 l oder Mischaggregate für den Produktionsmaßstab mit einem Volumen von 0,1 -2,5 m³ eingesetzt werden.

Bevorzugt werden bei dem erfindungsgemäßen Verfahren Zwangsmischer in Form von Intensivmischern mit schnell laufenden Mischwerkzeugen eingesetzt. Es hat sich gezeigt, dass eine Geschwindigkeit des Mischwerkzeuges von 10 - 30 ms⁻¹, besonders bevorzugt 15 -25 ms⁻¹ die besten Ergebnisse liefert. Kommerziell erhältliche Mischaggregate sind beispielsweise als Henschel-Mischer oder Eirich-Mischer bekannt.

Die Dauer des Vermischens beträgt bevorzugt 0,1 bis 120 Minuten, besonders bevorzugt 0,2 bis 60 Minuten, ganz besonders bevorzugt 0,5 bis 10 Minuten.

Im Anschluss an das Vermischen kann sich noch eine Temperaturbehandlung anschließen. Im Stand der Technik ist eine solche Behandlung vorgesehen um die Hülle fest an die Lithium-Mischoxidpartikel anzubinden. In der Regel ist diese Behandlung bei dem erfindungsgemäßen Verfahren nicht erforderlich, da das Gemisch von Aluminiumoxid und Titandioxid ausreichend fest auf den Lithium-Mischoxidpartikeln haftet. Eine bevorzugte Ausführungsform des erfindungsgemäßen Verfahrens sieht daher keine Temperaturbehandlung nach dem Vermischen vor.

Im Rahmen der Erfindung soll unter einem Gemisch sowohl eine physikalische Mischung verstanden werden, bei der Aluminiumoxidpartikeln neben Titandioxidpartikeln vorliegen. Ebenso kann es sich bei dem Gemisch um ein Mischoxid handeln, bei dem die Mischoxidkomponenten auf atomarer Ebene gemischt vorliegen und auch Ti-O-Al-Bindungen aufweisen können. Es hat sich gezeigt, dass eine physikalische Mischung bessere Ergebnisse bezüglich der Stabilität der Hülle zeigt.

Das Gewichtsverhältnis von Aluminiumoxid zu Titandioxid wird bevorzugt von 10:90 - 90:10 und besonders bevorzugt 30:70 - 70:30 gewählt.

Es hat sich gezeigt, dass die besten Ergebnisse bezüglich der Anhaftung an die Lithium-Mischoxidpartikel erhalten werden, wenn die Aluminiumoxidpartikel eine BET-Oberfläche von mehr als 50 m²/g, besonders bevorzugt mindestens 100 m²/g und ganz besonders bevorzugt 100 - 150 m²/g aufweisen.

Bei den im erfindungsgemäßen Verfahren eingesetzten Aluminiumoxidpartikeln handelt es sich bevorzugt um solche, die aus der Gruppe bestehend aus γ-, θ-, δ-Aluminiumoxid und Gemischen hieraus ausgewählt werden. Diese Aluminiumoxidphasen führen zu einer guten Anhaftung an die Lithium-Mischoxidpartikel. α-Aluminiumoxidpartikel hingegen liefern schlechtere Ergebnisse. Die Aluminiumoxidphasen können, sofern sie als Gemisch vorliegen, als miteinander fest verwachsene Phasen innerhalb eines Partikels vorliegen.

Bei dem erfindungsgemäßen Verfahren umfasst das Gemisch neben Aluminiumoxidpartikeln auch Titandioxidpartikel. Die BET-Oberfläche der eingesetzten Titandioxidpartikel beträgt bevorzugt wenigstens 40 m²/g und besonders bevorzugt 40 bis 100 m²/g.

Bevorzugt ist die BET-Oberfläche der eingesetzten Aluminiumoxidpartikel größer als die der eingesetzten Titandioxidpartikel.

Aluminiumoxidpartikel und Titandioxidpartikel werden beide in Form aggregierter Primärpartikel eingesetzt.

Diese aggregierten Primärpartikel können insbesondere durch pyrogene Verfahren erhalten werden. Unter pyrogen soll hier die Hydrolyse von Verbindungen des Aluminiums beziehungsweise des Titans in einer Flamme, erzeugt durch die Reaktion von einem Brenngas, bevorzugt Wasserstoff und Sauerstoff, verstanden werden. Dabei werden zunächst Primärpartikel gebildet, die hochdispers und nicht porös sind, die im weiteren Reaktionsverlauf zu Aggregaten zusammenwachsen und diese sich weiter zu Agglomeraten zusammenlagern. Während die Aggregate fest miteinander verwachsen sind, lassen sich die Agglomerate unter scherenden Bedingungen ganz oder teilweise in Aggregate zerlegen.

Der Durchmesser der Primärpartikel lässt sich aus der BET-Oberfläche abschätzen und liegt bei den pyrogenen Partikeln bei ca. 10 - 25 nm. Die Durchmesser der Aggregate beträgt ca. 50 - 1000 nm, der Durchmesser der Agglomerate 1 -2 µm.

Die Oberflächen der Partikel weisen Hydroxygruppen auf. Die so hergestellten Partikel weisen eine Reinheit von wenigstens 99,5 Gew.-%, in der Regel wenigstens 99,8 Gew.-% auf. Kommerziell erhältliche, pyrogene Pulver, die in Form aggregierter Partikel vorliegen sind beispielsweise AEROXIDE® Alu 65, AEROXIDE® Alu C, AEROXIDE® Alu 130, AEROXIDE® TiO₂ P25 und AEROXIDE® P90, alle Evonik Ressource Efficiency GmbH.

Das im erfindungsgemäßen Verfahren bevorzugt eingesetzte Lithium-Mischoxid wird aus der Gruppe bestehend aus Lithium-Cobalt-Oxiden, Lithium-Nickel-Mangan-Cobalt-Oxiden, Lithium-Nickel-Cobalt-Aluminium-Oxiden, Lithium-Mangan-Oxiden, Lithium-Nickel-Mangan-Oxiden, oder einem Gemisch hieraus ausgewählt.

Der Anteil der Summe von Aluminiumoxid und Titandioxid beträgt bevorzugt 0,05 - 5 Gew.-% und besonders bevorzugt 0,1 - 2 Gew.-%, jeweils bezogen auf die Summe von Lithium-Mischoxidpartikel, Aluminiumoxid und Titandioxid. Beträgt der Anteil weniger als 0,05 Gew.-% so ist eine vollständige Umhüllung der Lithium-Mischoxidpartikel nicht gewährleistet. Bei mehr als 5 Gew.-% wird kein zusätzlicher Effekt beobachtet.

Als weiteren Gegenstand sieht die Erfindung umhüllte Lithium-Mischoxidpartikel vor, die ein Gemisch von Aluminiumoxid und Titandioxid als Hüllmaterial umfassen, wobei das Aluminiumoxid und das Titandioxid in Form aggregierter Primärpartikel vorliegen und das Gewichtsverhältnis von Aluminiumoxid zu Titandioxid 10:90 - 90:10, bevorzugt 30:70 - 70:30, ist.

Die umhüllten Lithium-Mischoxidpartikel weisen bevorzugt einen Durchmesser von 2 - 20 µm und die Hülle eine Dicke von 50 - 500 nm auf.

Schließlich ist auch eine Batteriezelle, die die umhüllten Lithium-Mischoxidpartikel enthält, ein Gegenstand der Erfindung.

### Beispiele

### Einsatzstoffe

AEROXIDE® Alu 130, BET-Oberfläche 130 ± 20 m²/g; Al₂O₃-Gehalt ≥ 99,8 Gew.-%.

AEROXIDE® TiO₂ P25, BET-Oberfläche 50 ± 15 m²/g; TiO₂-Gehalt ≥ 99,5 Gew.-%, beide Evonik Resource Efficiency GmbH.

Lithium Cobalt Oxid Pulver, LCO LC412; mittlerer Durchmesser d₅₀ = 11 ± 2 µm (via Laserbeugung), BET-Oberfläche < 0,5 m²/g; Gelon.

### Beispiel:

5 g AEROXIDE® Alu 130 und 5 g AEROXIDE® TiO₂ P25 werden bei geringem Energieeintrag vermengt. Zu diesem Gemisch werden 990 g LCO LC412 gegeben und anschließend in einem Intensiv-Labor-Mischer mit einer Leistung 0,25 KW über einen Zeitraum von 1 min vermischt. Spezifische Leistung = 0,25 kW/kg; spezifische Energie = 0,042 kWh/kg = 15 KJ/kg. Anteil (Aluminiumoxid + Titandioxid) = 1 Gew.-%
Geschwindigkeit Mischwerkzeug 22 ms⁻¹.
Es wird ein umhülltes LCO-Pulver mit einer Schichtdicke von 100 - 200 nm erhalten.

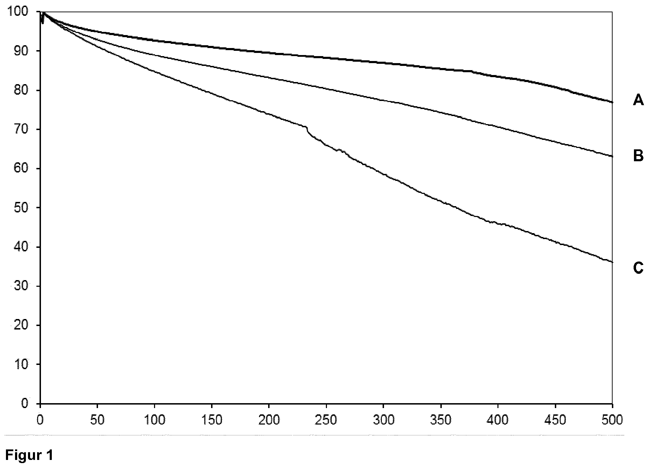

Figur 1 zeigt den Einfluss der Umhüllung auf die Zellkapazität in Abhängigkeit von der Zyklenanzahl. Dabei wird
(A) gemäß des erfindungsgemäßen Verfahrens mit einem 50:50 Gemisch von AEROXIDE® Alu 130 und AEROXIDE® TiO₂ P25 umhüllte LCO-Pulver verglichen mit
(B) nur mit AEROXIDE® Alu 130 beschichtetem LCO-Pulver und
(C) nicht umhülltem LCO-Pulver.

Es gilt: x-Achse = Anzahl Zyklen; y-Achse = normalisierte Zellkapazität in %; Ladeabschaltspannung = 4.4 V; Temperatur = 45°C.
(A) zeigt über den gesamten Zyklenbereich eine höhere Zellkapazität.

Es ist bekannt, dass beim Zyklisieren von Zellen Zersetzungsprodukte entstehen, welche den Innenwiderstand der Zelle und auch deren Temperatur erhöhen können. Der DCIR Wert soll daher sehr gering und relativ stabil über hunderte von Zyklen sein. Im Fall von unbeschichtetem LCO und mit Al₂O₃ beschichtetem LCO scheint eine für den Strom immer undurchlässigere Schicht um das Kathodenaktivmaterial herum zu wachsen, welche sich in einem höheren DCIR äußert.

Die Tabelle zeigt, dass dieser Effekt bei den erfindungsgemäß umhüllten Lithium-Mischoxidpartikeln deutlich weniger ausgeprägt ist.

**Tabelle: Innenwiderstand (DCIR*) in Ohm•cm² der elektrochemischen Zelle mit/ohne Beschichtung**

| **Probe** | **3. Zyklus** | **450. Zyklus** |
|---|---|---|
| LCO LC412 | 15,4 | 96,6 |
| AEROXIDE® Alu 130 + LCO LC412 | 17,7 | 92,6 |
| AEROXIDE® Alu 130 + TiO₂ P25 + LCO LC412 | 8,0 | 18,7 |

| | | |
|---|---|---|
| * direct current internal resistance; Pouch Vollzelltests; Spannungsbereich: 3,0 - 4,4 V; Temperatur:45°C; Formierung bei 0,02C/0,3C; Zyklisierung bei 1C/1C; Elektrodengröße: 25 cm² | | |

## Patentansprüche

1. Verfahren zur Herstellung umhüllter Lithium-Mischoxidpartikel,
**dadurch gekennzeichnet, dass**
man Lithium-Mischoxidpartikel und ein Gemisch umfassend Aluminiumoxid und Titandioxid, welche jeweils in Form aggregierter Primärpartikel vorliegen, mittels eines Mischaggregates mit einer spezifischen Leistung von 0,1 - 1 kW pro kg eingesetzte Lithium-Mischoxidpartikel und Gemisch, in Summe, unter scherenden Bedingungen trocken vermischt.

2. Verfahren nach Anspruch 1, **dadurch gekennzeichnet, dass**
die Leistung des Mischaggregates 0,1 - 1000 kW ist.

3. Verfahren nach Anspruch 1 oder 2, **dadurch gekennzeichnet, dass** das Volumen des eingesetzten Mischaggregates 0.001 bis 2.5 m³ ist.

4. Verfahren nach den Ansprüchen 1 bis 3, **dadurch gekennzeichnet, dass** die Geschwindigkeit des Mischwerkzeuges 10 - 30 ms⁻¹ ist.

5. Verfahren nach den Ansprüchen 1 bis 4, **dadurch gekennzeichnet, dass** die Dauer des Vermischens 0,1 bis 120 Minuten beträgt.

6. Verfahren nach Anspruch 1 bis 5, **dadurch gekennzeichnet, dass** das Gewichtsverhältnis von Aluminiumoxid zu Titandioxid 10:90 - 90:10 ist.

7. Verfahren nach den Ansprüchen 1 bis 6, **dadurch gekennzeichnet, dass** man Aluminiumoxidpartikel mit einer BET-Oberfläche von wenigstens 115 m²/g einsetzt.

8. Verfahren nach den Ansprüchen 1 bis 7, **dadurch gekennzeichnet, dass** man die Aluminiumoxidpartikel aus der Gruppe bestehend aus γ-, θ-, δ-Aluminiumoxid und Gemischen hieraus auswählt.

9. Verfahren nach den Ansprüchen 1 bis 8, **dadurch gekennzeichnet, dass** man Titandioxidpartikel mit einer BET-Oberfläche von wenigstens 40 m²/g einsetzt.

10. Verfahren nach den Ansprüchen 1 bis 9, **dadurch gekennzeichnet, dass** die BET-Oberfläche der eingesetzten Aluminiumoxidpartikel größer ist als die der eingesetzten Titandioxidpartikel.

11. Verfahren nach den Ansprüchen 1 bis 10, **dadurch gekennzeichnet, dass** man die Lithium-Mischoxidpartikel aus der Gruppe bestehend aus der Gruppe bestehend aus Lithium-Cobalt-Oxiden, Lithium-Nickel-Mangan-Cobalt-Oxiden, Lithium-Nickel-Cobalt-Aluminium-Oxiden, Lithium-Mangan-Oxiden, Lithium-Nickel-Mangan-Oxiden, oder einem Gemisch hieraus auswählt.

12. Verfahren nach den Ansprüchen 1 bis 11, **dadurch gekennzeichnet, dass** der Anteil der Summe von Aluminiumoxid und Titandioxid 0,05 - 5 Gew.-% ist, bezogen auf die Summe von Lithium-Mischoxidpartikel, Aluminiumoxid und Titandioxid.

13. Umhüllte Lithium-Mischoxidpartikel umfassend ein Gemisch von Aluminiumoxid und Titandioxid als Hüllmaterial, **dadurch gekennzeichnet, dass**
das Aluminiumoxid und das Titandioxid in Form aggregierter Primärpartikel vorliegen und das Gewichtsverhältnis von Aluminiumoxid zu Titandioxid von 10:90 - 90:10 ist.

14. Batteriezelle enthaltend die umhüllten Lithium-Mischoxidpartikel nach Anspruch 13.

## Claims

1. Process for producing coated mixed lithium oxide particles, **characterized in that**
mixed lithium oxide particles and a mixture comprising aluminium oxide and titanium dioxide that are each in the form of aggregated primary particles are subjected to dry mixing by means of a mixing unit having a specific power of 0.1-1 kW per kg of mixed lithium oxide particles and mixture used, in total, under shearing conditions.

2. Process according to Claim 1, **characterized in that** the power of the mixing unit is 0.1-1000 kW.

3. Process according to Claim 1 or 2, **characterized in that** the volume of the mixing unit used is 0.001 to 2.5 m³.

4. Process according to Claims 1 to 3, **characterized in that** the speed of the mixing tool is 10-30 ms⁻¹.

5. Process according to Claims 1 to 4, **characterized in that** the duration of the mixing is 0.1 to 120 minutes.

6. Process according to Claims 1 to 5, **characterized in that** the weight ratio of aluminium oxide to titanium dioxide is 10:90-90:10.

7. Process according to Claims 1 to 6, **characterized in that** aluminium oxide particles having a BET surface area of at least 115 m²/g are used.

8. Process according to Claims 1 to 7, **characterized in that** the aluminium oxide particles are selected from the group consisting of γ-, θ-, δ-aluminium oxide and mixtures of these.

9. Process according to Claims 1 to 8, **characterized in that** titanium dioxide particles having a BET surface area of at least 40 m²/g are used.

10. Process according to Claims 1 to 9, **characterized in that** the BET surface area of the aluminium oxide particles used is greater than that of the titanium dioxide particles used.

11. Process according to Claims 1 to 10, **characterized in that**
the mixed lithium oxide particles are selected from the group consisting of lithium-cobalt oxides, lithium-nickel-manganese-cobalt oxides, lithium-nickel-cobalt-aluminium oxides, lithium-manganese oxides, lithium-nickel-manganese oxides, or a mixture of these.

12. Process according to Claims 1 to 11, **characterized in that**
the proportion of the sum total of aluminium oxide and titanium dioxide is 0.05%-5% by weight, based on the sum total of mixed lithium oxide particles, aluminium oxide and titanium dioxide.

13. Coated mixed lithium oxide particles comprising a mixture of aluminium oxide and
titanium dioxide as coating material, **characterized in that** the aluminium oxide and the titanium dioxide are in the form of aggregated primary particles and the weight ratio of aluminium oxide to titanium dioxide is 10:90-90:10.

14. Battery cell comprising the coated mixed lithium oxide particles according to Claim 13.

## Revendications

1. Procédé pour la préparation de particules d'oxyde mixte de lithium enveloppées, **caractérisé en ce qu'**on mélange à sec des particules d'oxyde mixte de lithium et un mélange comprenant de l'oxyde d'aluminium et du dioxyde de titane, qui sont présents à chaque fois sous forme de particules primaires agrégées, au moyen d'un dispositif mélangeur doté d'une puissance spécifique de 0,1 à 1 kW par kilogramme de la somme des particules d'oxyde mixte de lithium et de mélange utilisés, dans des conditions de cisaillement.

2. Procédé selon la revendication 1, **caractérisé en ce que** la puissance du dispositif mélangeur est de 0,1 à 1 000 kW.

3. Procédé selon la revendication 1 ou 2, **caractérisé en ce que** le volume du dispositif mélangeur utilisé est de 0,001 à 2,5 m³.

4. Procédé selon les revendications 1 à 3, **caractérisé en ce que** la vitesse de l'outil mélangeur est de 10 à 30 ms⁻¹.

5. Procédé selon les revendications 1 à 4, **caractérisé en ce que** la durée du mélange est de 0,1 à 120 minutes.

6. Procédé selon les revendications 1 à 5, **caractérisé en ce que** le rapport pondéral d'oxyde d'aluminium à dioxyde de titane est de 10:90 à 90:10.

7. Procédé selon les revendications 1 à 6, **caractérisé en ce qu'**on utilise des particules d'oxyde d'aluminium dotées d'une surface BET d'au moins 115 m²/g.

8. Procédé selon les revendications 1 à 7, **caractérisé en ce qu'**on choisit les particules d'oxyde d'aluminium dans le groupe constitué par l'oxyde d'aluminium y, l'oxyde d'aluminium θ, l'oxyde d'aluminium δ et des mélanges correspondants.

9. Procédé selon les revendications 1 à 8, **caractérisé en ce qu'**on utilise des particules de dioxyde de titane dotées d'une surface BET d'au moins 40 m²/g.

10. Procédé selon les revendications 1 à 9, **caractérisé en ce que** la surface BET des particules d'oxyde d'aluminium utilisées est plus grande que celle des particules de dioxyde de titane utilisées.

11. Procédé selon les revendications 1 à 10, **caractérisé en ce qu'**on choisit les particules d'oxyde mixte de lithium dans le groupe constitué par des oxydes de lithium-cobalt, des oxydes de lithium-nickel-manganèse-cobalt, des oxydes de lithium-nickel-cobalt-aluminium, des oxydes de lithium-manganèse, des oxydes de lithium-nickel-manganèse, ou un mélange correspondant.

12. Procédé selon les revendications 1 à 11, **caractérisé en ce que** la proportion de la somme de l'oxyde d'aluminium et du dioxyde de titane est de 0,05 à 5 % en poids, par rapport à la somme des particules d'oxyde mixte de lithium, de l'oxyde d'aluminium et du dioxyde de titane.

13. Particules d'oxyde mixte de lithium enveloppées comprenant un mélange d'oxyde d'aluminium et de dioxyde de titane en tant que matériau d'enveloppe, **caractérisées en ce que** l'oxyde d'aluminium et le dioxyde de titane sont présents sous forme de particules primaires agrégées et le rapport pondéral d'oxyde d'aluminium à dioxyde de titane est de 10:90 à 90:10.

14. Cellule de batterie contenant les particules d'oxyde mixte de lithium enveloppées selon la revendication 13.
